# EUROPÄISCHE PATENTSCHRIFT

(11) **EP 1 237 014 B1**
(45) Veröffentlichungstag und Bekanntmachung des Hinweises auf die Patenterteilung: **23.08.2006**
(21) Anmeldenummer: 02003912.9
(22) Anmeldetag: 21.02.2002
(51) Int. Cl.: G01T 1/17

(54) **Verfahren und Vorrichtung zur Verarbeitung von Detektorsignalen**
Method and apparatus for processing detector signals
Procédé et dispositif de traitement de signaux de détecteurs

(30) Priorität: 23.02.2001 DE 10109002
(43) Veröffentlichungstag der Anmeldung: 04.09.2002
(73) Patentinhaber: Forschungszentrum Jülich GmbH, 52425 Jülich (DE)
(72) Erfinder: Gast, Werner, Dr., 50939 Köln (DE); Rossewij, Marcus, 3445 XJ Woerden (NL); Mihailescu, Lucian, 52428 Jülich (DE); Lieder, Rainer, Prof.-Dr., 52428 Jülich (DE)
(74) Vertreter: Jostarndt, Hans-Dieter

(56) Entgegenhaltungen:
- EP-A- 0 166 169
- EP-A- 0 981 997
- US-A- 2 550 488
- US-A- 5 307 299
- US-A- 5 347 129
- US-A- 5 535 033
- US-A- 5 608 222

## Beschreibung

Die Erfindung betrifft ein Verfahren zur Verarbeitung von Dietektorsignalen und eine Vorrichtung zur Durchführung des Verfahrens.

Die deutsche Patentschrift DE 42 26 175 C2 und die US-Patentschrift US 5 307 299 beschreiben ein Verfahren zur digitalen Verarbeitung von Dektektorsignalen eines Halbleiterdetektors.

Bei einem Halbleiterdetektor setzt jedes Strahlungoereignis eine der abeorbierten Energie entsprechende Ladungsmenge frei, die in einem Vorverstärker gesammelt wird. Das Ausgangssignal des Vorverstärkers kann als Faltung zwischen der Ladungsverteilungsfunktion und der Vorverstärkerübertragungsfunktion betrachtet werden.

Die deutsche Patentschrift DE 42 26 175 C2 und die US-Patentschrift 5 307 299 beschreiben insbesondere ein Verfahren, das die Faltung im Ausgangssignal rückgängig macht und als gleitende Entfaltung ("Moving Window Deconvolution") bezeichnet wird.

Bei diesem Verfahren wird aus dem digitalisierten Ausgangssignal des Vorverstärkers die in einem über die Abtastwerte gleitenden Fenster mit einer bestimmten Anzahl im Abstand eines Abtastintervalls aufeinander folgender Abtastwerte rekursiv die akkumulierte Gesamtladung bestimmt, aus der die Gesamtenergie des Strahlungsereignisses rekonstruiert werden kann.

Die deutsche Patentschrift DE 42 26 175 C2 und die US-Patentschrift US 5 307 299 beschreibt ferner eine Schaltungsanordnung zum Auswerten von Detektorsignalen, bei dem Detektoren Detektorsignale erzeugen, die über Vorverstärker verstärkt und anschließend über beispielsweise etwa 2 Meter bis 200 Meter lange analoge Sighalübertragungskabel an Abtast-Analog-Digital-Umwandler übertragen werden. Hinter den Abtast-Analog-Digital-Umwandlern (ADU) sind digitale Signalverarbeitungseinheiten geschaltet. Die digitalen Signalverarbeitungseinheiten verarbeiten je nach Leistungsfähigkeit den kontinuierlichen Datenstrom eines einzelnen oder mehrerer Abtast-Analog-Digital-Umwandler (ADU). Die Daten der verschiedenen digitalen Signalverarbeitungseinheiten werden anschließend bei diesen bekannten Verfahren durch eine zentrale Datenerfassungseinheit DAQ erfasst

Die europäische Patentanmeldung EP 0 166 169 A beschreibt eine Verfahrensvorschrift sowie eine elektronische vorrichtung zur Auswertung von aufeinander folgenden Detektorereignissen. Ein typisches Anwendungsbeispiel ist die Messung von Detektorereignissen, beispielsweise bei einer Gamma-Kamera, wobei die Detektorereignisse in Form von zeitlich aufeinander folgenden Impulsen anliegen. Diese Serie von Impulsen führt zu einer Impulsanhäufung, was die Bestimmung eines einzelnen Impulses inmitten der Serie problematisch gestaltet. Aus diesem Grunde zeichnet sich die spezielle Art der Signalerfassung im vorliegenden Fall dadurch aus, dass zur Detektion mehr als eine Abtastfrequenz, welche eine Harmonische einer ersten Abtastfrequenz ist, eingesetzt wird. Zudem ist der Zeitpunkt des Detetionsbeginns in Abhängigkeit von den zusätzlichen Abtastfrequenzen bekannt. Aus diesen Informationen und unter Ausnutzung einer Verarbeitung einer Anzahl an gemessenen Datenpunkten je Signaldetektion werden die einzelnen aufeinander folgenden Signale in Relation zum jeweils vorangehenden Signal weiterverarbeitet. Hierdurch wird die Genauigkeit der Erfassung von einzelnen Detektorereigniesen erhöht.

Das in der US-Patentschrift US 5 608 222 A vorgestellte Verfahren ermöglicht die Benutzung von nichtlinearen Detektoren, beispielsweise zur Gamma-Strahlen-Spektroskopie, bei gleichzeitiger Reduzierung der durch die nichtlinearen Detektoren ausgelösten Verzerrungen der spektralen Auflösung. Insbesondere führen nichtlineare Detektoren zur Veränderung der gemessenen spektralen Auslösung in Abhängigkeit von der eingestrahlten Energie des Detektorereignisses, wobei dieser unerwünschte Effekt beim Verfahren nach US 5 608 222 A mittels einer geeigneten Übertragungsfunktion verringert wird. Hierzu wird das Detektorereignis mathematisch mit einer vordefinierten Übertragungsfunktion in Relation gesetzt, so dass etwaige Nicht-Linearitäten innerhalb des Empfängersystems die anschließende Bestimmung der spektralen Ereignisse nicht beeinflussen.

Das US-Patent US 5 347 129 A offenbart eine Methodik, mittels derer aus einer Abfolge an Detektorereignissen ein bestimmtes Detektorereignis durch Korrelationaanalyse mit einem zuvor festgelegten Referenzsignal extrahiert werden kann. Die Vorgehensweise ist hierbei im Wesentlichen durch die folgenden Verfahrensschritte gekennzeichnet. Zunächst erfolgt unmittelbar an die Detektion anschließend eine Vorverstärkung der Detektorereignisse. Ein nachfolgender analog-zu-digital Konverter digitalisiert die Daten, wobei die digitalisierten Daten über ein Interface und eine DSP (*Digital Signal Processing*)-Einheit einem PC zugänglich gemacht werden. Der PC übernimmt hierbei den eigentlichen Ablauf der Korrelationsanalyse, indem es ein zuvor im Speicher abgelegtes Referenzsignal heranzieht.

Die US-Patentschrift US 2 550 488 A offenbart eine Vorrichtung zur Registrierung von Ereignissen, insbesondere von Ereignissen hervorgerufen durch Alpha-Teilchen, Beta-Teilchen, Gamma-Strahlung oder Neutronen-Strahlung. Eine galvanische Trennung zwischen einem Eingangssignal, dem Ereignis und einem Ausgangssignal wird mittels einer Gas-Tetrode erreicht.

Die europäische Patentanmeldung EP 0 981 997 A beschreibt eine bildgebende, Röntgenstrahlung erzeugende Vorrichtung, im Besonderen eine computertomografische Vorrichtung zur Erzeugung von in-vivo oder *in-vitro* Schichtbildern eines Objektes, wobei die Vorrichtung in einem Mehrechichtakquisitionsmodus operiert. Eine Besonderheit dieser Anordnung ist der Einsatz eines Multiplexers zur Zusammenführung der Signale von einzelnen Strahlendetektoren, so dass nur ein Datenbus zur Übertragung der Signale notwendig ist.

Die Vorrichtung, beschrieben in der US-Patentschrift US 5 535 033 A, ermöglicht eine kontaktfreie Datenübertragung zwischen einem Sender und einem Empfänger, insbesondere zwischen einem beweglichen und einem stationären Teil eines Computertomografen. Hierfür wird mindestens ein lateral emittierendes Lichtleiterkabel verwendet, das mit einem optoelektronischen Element koppelt.

Ferner ist es bekannt, Detektorsignale durch Handgeräte zu erfassen. Die Handgeräte weisen jeweils einen einzelnen Detektor auf. Eine Datenübertragungsstrecke ist hierbei nicht vorgesehen, da die Detektions- und Erfassungsmittel in einem Gehäuse zusammengefasst sind.

Der Erfindung liegt die Aufgabe zugrunde, ein gattungsgemäßes Verfahren so weiterzuentwickeln, dass ein Einfluss von Störsignalen vermieden wird.

Erfindungsgemäß wird diese Aufgabe durch ein Verfahren mit den Merkmalen des Patentanspruchs 1 und durch eine Vorrichtung mit den Merkmalen des Patentanspruchs 5 gelöst. Zweckmäßige Weiterbildungen des Verfahrens und der Vorrichtung sind Gegenstand der Unteransprüche.

Es ist insbesondere vorgesehen, dass analoge Messsignale unmittelbar nach einer Vorverstärkung durch einen Abtast-Analog-Digital-Umwandler (ADU) in digitale Signale umgewandelt werden und dass die digitalen Signale anschließend über eine digitale Datenübertragungsstrecke zu einer digitalen Signalverarbeitungseinheit und einer Datenerfassungseinheit (DAQ) übertragen werden.

Die Erfindung sieht vor, analoge Signale von Detektoren im Bereich der Detektoren in digitale Signale umzuwandeln und anschließend die digitalen Signale über eine Datenübertragungsstrecke zu übertragen.

Hierbei ist es sowohl möglich, die digitalen Signale unverändert oder verarbeitet zu übertragen.

Der sich durch die Umwandlung der Detektorsignale in digitale Signale ergebende digitale Signalstrom kann vielfältig weiter verarbeitet werden.

Die Weiterverarbeitung der digitalen Signale kann dabei sowohl vor der Datenübertragungsstrecke im Bereich der Detektoren als auch nach der Datenübertragungsstrecke im Bereich der Datenerfassungseinheit (DAQ) erfolgen.

Eine erste zweckmäßige Ausführungsform der Erfindung zeichnet sich dadurch aus, dass die digitalen Signale im Wesentlichen unverändert zu der digitalen Signalverarbeitungseinheit und Datenerfassungseinheit (DAQ) übertragen werden.

Eine weitere, vorteilhafte Ausführungsform der Erfindung zeichnet sich dadurch aus, dass die digitalen Signale vor der Übertragung über die Datenübertragungsstrecke wenigstens einem digitalen Signalverarbeitungsschritt unterworfen werden.

Der digitale Signalverarbeitungsuchritt kann auf vielfältige Weise erfolgen, zum Beispiel durch einen programmierbaren Logikbaustein (PLD).

Die Durchführung des digitalen Signalverarbeitungsschrittes vor der Datenübertragung über die Datenübertragungsstrecke macht es möglich, die Zahl der über die Datenübertragungsstrecke zu übertragenden Daten zu reduzieren.

Eine besonders wirksame Reduktion des Datenstromes lässt sich dadurch erzielen, dass der Signalverarbeitungsschritt eine Triggerung der digitalen Signale umfasst. Triggerung bedeutet, dass die Bereiche des vom ADU abgetasteten und digitalisierten Signalverlaufs markiert werden, welche Informationen über das Detektionsereignis enthalten.

Hierdurch wird es möglich, zuerst das jeweils zu untersuchende Ereignis - insbesondere ein Detektionsereignis - aus dem Datenstrom herauszufiltern und anschließend die Informationen über das jeweilige Ereignis zu übertragen.

Ferner ist es zur Reduktion des Datenstroms zweckmäßig, dass in einem oder mehreren Signalverarbeitungsschritten eine Energieinformation über das Detektionsereignis aus den digitalen Abtastwerten extrahiert wird.

Hierbei ist es aufgrund der Eigenschaften der Detektorsignale besonders vorteilhaft, eine Moving-Window-Deconvolution-Technik einzusetzen.

Ferner lässt sich eine Reduzierung des Datenstroms vorteilhafterweise dadurch erreichen, dass durch weitere Verarbeitungsschritte Informationen über Wechselwirkungsorte von Detektionsereignissen im Detektor ermittelt werden.

Weiterhin ist es insbesondere vorgesehen, eine Vorrichtung zur Verarbeitung von Detektorsignalen mit Vorverstärkern zum Verstärken der Detektorsignale, mit Abtast-Analog-Digital-Umwandlern (ADU) zur Umwandlung der Detektorsignale in digitale Signale, mit einer Signalverarbeitungseinheit und mit einer Datenübertragungsstrecke so auszugestalten, dass die Abtast-Analog-Digital-Umwandler (ADU) sich zwischen den Vorverstärkern und der Datenübertragungsstrecke befinden.

Ein besonders kompakter und zweckmäßiger Aufbau der Vorrichtung lässt sich vorteilhafterweise dadurch erzielen, dass sich zwischen den Abtast-Analog-Digital-Umwandlern (ADU) und der Datenübertragungsstrecke Signalverarbeitungseinheiten befinden.

Hierbei ist eine wegen der Flexibilität ihrer Programmierbarkeit und ihrer Kompaktheit besonders zweckmäßige Ausführungsform die, bei der wenigstens ein Teil der digitalen Signalverarbeitungseinheiten mit digitalen Signalprozessoren (DSP) und programmierbaren Logikbausteinen (PLD), beziehungsweise Field Programmable Gate Arrays (FPGA) ausgebildet ist.

Eine Reduzierung der Anzahl der erforderlichen Datenübertragungsstrecken und digitalen Signalverarbeitungseinheiten wird in einer besonders vorteilhaften Ausführungsform der Erfindung dadurch erzielt, dass mehrere Abtast-Analog-Digital-Umwandler (ADU) mit Eingängen eines Multiplexers verbunden sind, der die Signale zusammenfasst und zu einer gemeinsamen digitalen Signalverarbeitungseinheit überträgt.

Ferner ist es zweckmäßig, dass Ausgänge mehrerer digitaler Signalverarbeitungseinheiten mit einem Multiplexer verbunden sind, wobei der Multiplexer die von den digitalen Signalverarbeitungseinheiten ausgegebenen Signale in einem Datenübertragungskanal überträgt. Hierdurch ist es möglich, bei Datenübertragungsstrecken mit einer geringeren Anzahl von Datenübertragungskanälen dennoch vollständige Informationen über die Detektionssignale zu übermitteln.

Eine Verringerung von Störeinflüssen lässt sich in einer besonders vorteilhaften und zweckmäßigen Weise dadurch erreichen, dass die Übertragungsstrecke wenigstens einen Lichtleiter enthält. Hierdurch erfolgt zusätzlich eine galvanische Entkopplung zwischen der Signale fassung und der Datenaufnahme.

Weitere Vorteile, Besonderheiten und zweckmäßige Weiterbildungen der Erfindung ergeben sich aus den Unteransprüchen und der Darstellung bevorzugter Ausführungsbeispiele.

Nachfolgend wird die Erfindung am Beispiel von Detektoren für γ-Strahlung erläutert.

Die Erfindung ist jedoch nicht auf die dargestellten Detektoren beschränkt, da die dargestellte Signalverarbeitung unabhängig von der Art der Detektoren erfolgen kann.

Bei der nachfolgenden Darstellung werden die Detektionsereignisse zusammen mit Energiewerten, Zeitpunkten und Ortsangaben erfasst und verarbeitet.

Es ist zweckmäßig, dass digitale Signalverarbeitungsschritte angewendet und miteinander kombiniert werden.

Ein Signalverarbeitungsschritt ist die Triggerung. Durch die Triggerung wird vorzugsweise eine erste bedeutende Reduktion des Datenstroms erzielt, insbesondere durch die Unterdrückung der Bereiche des vom ADU abgetasteten und digitalisierten Signalverlaufes, die keine relevante Information über das Detektionsereignis enthalten.

Bei einer Durchführung der Triggerung in einem programmierbaren Baustein kann die Triggerung durch eine Umprogrammierung des Bausteins variiert werden.

So ist es beispielsweise möglich, die Vorrichtung zur Verarbeitung der Detektionssignale und das dazugehörige Verfahren an jeweils experimentell gewünschte Parameter anzupassen.

Eine weitere vorteilhafterweise erfasste Information ist die Energie des Detektionsereignisses.

Zur Ermittlung von Energieinformationen eignen sich verschiedene Verfahrensschritte, die eine Reduktion des vollen Datenstroms von einem Abtastwert pro Abtastintervall auf lediglich einen Energiewert pro Detektionsereignis beinhalten.

Zur Reduzierung der erforderlichen Datenübertragungs- und Rechenleistung ist es möglich, vor Ermittlung der Energie eine Unterabtastung (Decimation) bzw. Mittelwertbildung über mehrere Abtastwerte der digitalisierten Detektorsignale durchzuführen.

Zur Erfassung von Zeitinformationen ist es zweckmäßig, Verfahrensschritte zu berücksichtigen, die eine Ermittlung von Zeitinformationen ermöglichen.

Hierbei wird vorzugsweise die Erkenntnis genutzt, dass es ausreicht, nur ausgewählte Abtastwerte, insbesondere solche aus dem Bereich der Anstiegsflanken der digitalisierten Detektorsignale, auszuwerten, um den Zeitpunkt des Detektionsereignisses zu ermitteln.

Zur Ermittlung der Wechselwirkungsorte von Detektionsereignissen ist gleichfalls eine Vielzahl von Verfahren, bzw. Verfahrensschritten geeignet.

Vorzugsweise wird auch hierbei die Form der Anstiegsflanken der digitalisierten Signale der Detektionsereignisse ausgewertet. Außerdem ist es vorteilhaft, Wavelet-Transformationen zur Extraktion der relevanten Eigenschaften des Signals einzusetzen.

Bei der Bestimmung der Wechselwirkungsorte der Detektionsereignisse werden die Daten mehrerer Signalverarbeitungskanäle kombiniert, so dass sich eine weitere Datenreduktion ergibt.

Bei den dargestellten Beispielen wird eine Kombination aus Vorverstärker und Abtast-Analog-Digital-Umwandler (ADU) als ein digitaler Vorverstärker bezeichnet, da hierdurch aus den ursprünglich analogen Messignalen digitale Signale gewonnen werden.

Bei der Übertragung der digitalisierten Signale ist es in der Regel möglich, sich auf Bereiche des Signals zu beschränken, welche relevante Information enthalten, oder die Signale in digitalen Signalverarbeitungseinheiten vorzuverarbeiten, was sich in einer Reduktion der über die Datenübertragungsstrecke zu übertragenden Daten bei Detektoranordnungen mit einer Vielzahl von Detektoren besonders bemerkbar macht.

Zur Verdeutlichung sind nachfolgend Beispiele genannt, in denen konkrete Anzahlen (ND:= Number of Detectors) von Detektoren genannt sind, wobei die Erfindung nicht auf bestimmte Anzahlen beschränkt ist.

Eine Detektoranordnung mit beispielsweise 180 segmentierten Detektoren, die jeweils beispielsweise 32 Segmente (NS:= Number of Segments) und einen zentralen Kontakt aufweiten, ergibt sich beispielhaft die Anzahl von 5.940 Datenverarbeitungskanälen (NC:= Number of Channels). Die anderen nachfolgend angegebenen Werte sind gleichfalls beispielhaft zur Erläuterung der Rechenbeispiele zu verstehen.

Bei den Rechenbeispielen weisen die Abtast-Analog-DigitalUmsetzer (ADU) eine Datenbreite vo 14 bit (CR:= Conversion Range) und eine Abtastrate (SF:= Sampling Frequency) von 50 MSPS auf.

Ferner werden in den Beispielen eine maximale Detektionsereignisrate (DE:= Detector Event rate) von 20.000 Hz Zählereiguissen, eine durchschnittliche Anzahl von 4 Wechselwirkungen pro Detektionereignis (NI:= Number of Interactions), eine Anzahl von 10 aktiven Segmenten pro Detektionereignis (NA:= Number of Active segments) je Detektor und eine externe Triggerrate (TR:= Trigger Rate) von beispielsweise 100 kHz bzw. 1 MHz angenommen.

Außerdem wird bei den Beispielen von einer für die Pulsformanalyse relevanten Ladungssammlungszeit des Detektors von etwa 400 ns ausgegangen, was einer maximalen Anzahl von 25 Abtastwerten für den Anstiegsflankenbereich des Signals des Detektionsereignisses entspricht (NL:= Numher od Leadingedge samples).

Die Datenbreite der ausgegebenen Daten beträgt bei den Beispielen 48 bit für die Zeitmarkierung (WTS:= Word width of Time Stamp), 16 bit für die Energie (WEN:= Word width of Energy), 8 bit für die Spezifizierung des genauen Zeitpunktes innerhalb eine Abtastintervalls (WTI:= Word width of Timing) und 32 bit für die Positionsangaben (WPO:= Word width of Position).

Dabei verteilen sich die 32 bit für die Positionsangabe auf 8 bit für die Detektornummer und jeweils 6 bit für die Segmentnummer, den Radius, den zugehörigen Azimuthalwinkel und für die axiale z-Koordinate eines Detektors.

### Beispiel 1:

In einer bevorzugten Ausführungsform der Erfindung übernimmt der digitale Vorverstärker nur eine Vorverstärkung und Digitalisierung des Detektorsignals, während die weiteren Signalverarbeitungsschritte erst nach Übertragung der Daten über die Datenübertragungsstrecke in einer Signalverarbeitungseinheit vorgenommen werden.

Die Datenübertragungsrate betragt für jeden einzelnen Datenübertragungskanal CR*SF = 87.5 MByte/s.

Die Daten der einzelnen Datenverarbeitungskanäle können über individuelle Datenübertragungsstrecken ausgegeben werden. Alternativ können durch den Einsatz eines oder mehrerer Multiplexer mehrere Datenübertragungsstrecken mit einer geringeren Bandbreite zu einer Datenübertragungsstrecke mit hoher Bandbreite zusammengefasst werden.

In dem dargestellten Fall, in dem die Datenkanäle eines 32-fach segmentierten Detektors zusammengefasst werden, beträgt die erforderliche Bandbreite der Gesamtübertragungsstrecke eines Detektors 2.89 GByte/s zuzüglich Übertragungsprotokolldaten. Bei höheren Abtastraten und/oder einer höheren Anzahl von Detektorsegmenten kann die erforderliche Bandbreite erheblich höher sein. Zweckmäßigerweise wird die Bandbreite den Eigenschaften der jeweiligen Detektoranordnung angepasst.

Durch die Zusammenfassung von Datenübertragungsstrecken wird der Umfang der für die eigentliche Übertragung selbst einzusetzenden digitalen Bausteine verringert, insbesondere für die Datenformat-Anpassung, Protokollanpassung und für die Leitungstreiber.

Im Unterschied zu den bekannten Verfahren, bei denen analoge Signale über die Datenübertragungsstrecke übertragen werden, ist dieses System weitaus unempfindlicher gegenüber Störsignalen.

Zur weiteren Verringerung von Störungen ist es zweckmäßig, die analoge Verarbeitung der Signale im empfindlichen analogen Teil des Vorverstärkers von ihrer digitalen Verarbeitung zu trennen. Dies geschieht besonders zweckmäßig dadurch, dass die digitale Datenübertragungsstrecke wenigstens einen Lichtleiter oder eine anderweitige galvanische Entkopplung enthält.

In einer weiteren bevorzugten Ausführungsform der Erfindung werden zusätzliche Signalverarbeitungsschritte in den digitalen Vorverstärker integriert.

Die folgenden Beispiele beinhalten eine weitgehende Anwendung von Signalverarbeitungsschritten vor der Übermittlung der Daten über die Datenübertragungsstrecke, so dass der Datenstrom, und damit die erforderliche Bandbreite der Datenübertragungsstrecken sowie die Belastung der nachfolgenden Signalverarbeitungseinheiten reduziert werden.

Um diese Signalverarbeitungsschritte möglichst effektiv und flexibel durchführen zu können, ist es zweckmäßig, im Bereich der digitalen Vorverstärker Programmable Logic Devices (PLD), Field Programmable Gate Arrays (FPGA), oder Digital Signal Processors (DSP) einzusetzen.

### Beispiel 2:

Für Signalverarbeitungsschritte wie z.B. die Moving Window Deconvolution (MWD) zur Extraktion der Energie der Detektionsereignisse, welche nicht die volle Bandbreite des Detektorsignals erfordern, kann eine Unterabtastung (Decimation) um einen adäquaten Faktor erfolgen. Im dargestellten Fall beträgt der Faktor 3, jedoch ist dies nur beispielhaft zu verstehen. Mit diesem Reduktionsfaktor ergibt CR'*SF/8 = 13.3 MByte/s als erforderliche Bandbreite je Signalverarbeitungskanal für die Übertragung der Energieinformation.

Zur weiteren Verringerung des Datenstroms kann bei diesem Verfahren ein Triggern der digitalisierten Detektorsignale genutzt werden.

Das Triggern der Signale kann sowohl durch ein Selbsttriggern auf Kanal- oder Detektorebene, als auch durch eine Triggerung auf globaler Ebene mit einem externen Triggersignal erfolgen, wobei die verschiedenen Triggermethoden beliebig miteinander kombiniert werden können.

Die Selbsttriggerung eignet sich insbesondere dazu, den Datenstrom insofern zu verringern, als dass nur einige wenige Abtastwerte aus dem Bereich der Anstiegsflanke der Signale von Detektionsereignissen berücksichtigt werden, während der überwiegende Rest nicht übertragen wird.

Da bei einer Selbsttriggerung eine Steuerung durch die Daten selbst erfolgt, hängt hierbei der resultierende Datenstrom von der Anzahl DE der Detektionsereignisse ab.

Bei einer Selbsttriggerung auf Detektorebene ist es erforderlich, alle Datenkanäle NC' eines Detektors, d.h. die der 32 Segmente plus den des zentralen Kontaktes, auszulesen. Im dargestellten Fall gilt NC' = NC/ND = 33.

Damit ergibt sich für die jeweils 25 Abtastwerte NL aus dem Anstiegsflankenbereich der Signale der Detektionsereignisse DE eine Datenrate von NC'*DE*NL*CR = 28.9 MByte/s je Detektor.

Für die Abtastwerte (decimated) für die Energiebestimmung gilt NC'*13.3 = 438.9 MByte/s.

Für den Datenstrom der Zeitmarkierungen gilt DE*WTS = 0.12 MByte/s.

Der Gesamtdatenstrom je Detektor beträgt im dargestellten Beispiel 468 MByte/s, was einer Reduktion um den Faktor 6.2 gegenüber dem Beispiel i entspricht.

Durch selektives Triggern auf aktiven Einzelkanälen und/oder durch Nullunterdrückung, d.h. Unterdrückung von Kanälen, die keine Signale von Detektionsereignissen enthalten, ist es möglich, ein Auslesen von Kanälen zu vermeiden, die keine für die Messung relevante Information enthalten. Für das Auslesen der Abtastwerte aus dem Anstiegsflankenbereich der Signale von Detektionereignissen ergibt sich dadurch eine weitere Verringerung des Datenstroms um den Faktor NA/NC' = 0.3.

Bei einer derartigen Reduktion müssen dann jedoch Identifikationsangaben über die aktiven Segmente mitübermittelt werden, was den Datenstrom wieder leicht um DE*MA*6bit = 0.15 MByte/s erhöht.

Die Generierung eines globalen Triggersignals erfolgt vorzugsweise durch ein externes Gerät.

Das Triggern durch ein externes Gerät erfordert ein Hinzufügen von entsprechenden Ein- und Ausgängen zu den digitalen Vorverstärkern, sowie eine galvanische Entkopplung der Leitungen, über welche die Triggersignale übermittelt werden.

Externes Triggern hat den Vorteil, dass sich die Zählrate der auszulesenden Detektionsereignisse auf die effektive Triggerrate dividiert durch die Gesamtzahl der Detektoren, das heißt, auf beispielsweise DE_{H} = (TR_{H} *30)/ND = 16.7 KHz für ein 100 KHz Triggersignal TR_{H}, welches auf 30 Detektoren wirkt (high multiplicity trigger), beziehungsweise auf DE_{L} = (TR_{L} *1)/ND = 5.6 KHz für ein 1 MHz Triggersignal TR_{L}, welches auf jeweils nur einen Detektor wirkt (low multiplicity trigger), reduziert.

Hierdurch ergibt sich eine weitere Reduktion der Datenübertragungsraten für die Abtastwerte aus dem Anstiegsflankenbereich der Signale von Detektionereignissen, im dargestellten Fall auf 24.1 MByte/s für den high multiplicity trigger, beziehungsweise auf 8.0 MByte/s für den low multiplicity trigger.

### Beispiel 3:

In Beispiel 3 ist erläutert, wie durch die Implementation weiterer Funktionen in die digitalen Signalverarbeitungseinheiten im Bereich der digitalen Vorverstärker die Datenübertragungsrate weiter reduziert werden kann.

Hierzu ist es erforderlich, dass die digitalen Signalverarbeitungneinheiten komplexere Funktionen wie die Moving-Window-Deconvolution Technik einsetzen. Die damit durchgeführte Analyse der Energie der Detektionsereignisse führt zu einer besonders drastischen Reduzierung der Datenübertragungsrate. Im dargestellten Fall beträgt die Reduktion NC'*CR'*SF/8 = 438.9 MByte/s zu NC'*DE*WEN = 1.32 MByte/s, da aus mehreren hundert Abtastwerten lediglich jeweils ein Energiewert WEN extrahiert wird, der übertragen werden muss.

Außerdem ist es durch die Energieanalyse möglich, Datenkanäle, die Energieinformation enthalten von solchen, die keine Energieinformation enthalten, zu unterscheiden.

Durch selektives Triggern und Auslesen von Energiewerten aus ausschließlich den Datenkanälen, die Energieinformation enthalten, lässt sich die Datenübertragungsrate weiter reduzieren, im dargestellten Fall auf ((NS/3)+1)*DE*WEN = 0.17 MByte/s.

Zusammen mit dem entsprechenden Datenstrom für den Anstiegsflankenbereich der Signale von Detektionereignissen von NA*DE*NL*CR = 8.7 MByte und der zu übertragenden Information über die Zeitpunkte von Detektionsereignissen sowie zur Identifikation der aktiven Detektorsegmente ergibt sich ein Gesamtdatenstrom von etwa 9 MByte/s je Detektor.

Dies stellt eine sehr deutliche Reduktion im Vergleich zur Ausgangssituation dar, bei der der Gesamtdatenstrom 2.89 GByte/s je Detektor betrug.

Wie oben beschrieben lässt sich durch externes Triggern die Detektionsereigniszählrate DE weiter reduzieren, beispielsweise um den Faktor DE_{H} /DE = 0.84 beziehungsweise DE_{L}/DE = 0.28.

Die dargestellten Beispiele zeigen bevorzugte Ausführungsbeispiele der Erfindung. Insbesondere zeigen die Beispiele Vorteile, die sich daraus ergeben, das die Detektorsignale bereits in der unmittelbaren Umgebung der Detektoren in digitale Signale umgewandelt werden. Hierbei zeigt sich, dass sowohl die Zahl der erforderlichen Datenübertragungsstrecken als auch ein Einfluss von Störsignalen verringert wird.

Zur weiteren Verringerung der Zahl der erforderlichen Datenübertragungsstrecken und deren Übertragungsbandbreiten durch Verringerung der zu übermittelnden Daten erfolgt im Bereich der Detektoren und der dort befindlichen Abtast-Analog-Digital-Umwandler (ADU) in einzelnen Beispielen der Erfindung eine Vorverarbeitung der digitalisierten Signale.

Die dargestellte Vorverarbeitung der Signale ist erst nach deren Digitalisierung möglich, aber dennoch beispielhaft zu verstehen, da auch andere Vorverarheitungsschritte, welche eine Elimination der für die Signalverarbeitung unwichtigen und eine Reduktion der für die Signalverarbeitung wichtigen Daten ermöglichen, eingesetzt werden können.

Besonders bevorzugte Ausführungsbeispiele der Erfindung beinhalten das Konzept, im Bereich der Abtast-Analog-Digital-Umwandler (ADU) und mit ihnen verbundener digitaler Signalverarbeitungseinheiten bereits eine erste Auswertung der Daten vorzunehmen.

Durch eine Auswahl geeigneter elektronischer Bauelemente ist es möglich, die jeweiligen Verfahren an experimentelle Bedürfnisse anzupassen. Vorzugsweise werden dazu programmierbare digitale Bauelemente eingesetzt.

Besonders vorteilhaft ist, dass einzelne Elemente der Erfindung beliebig miteinander kombiniert werden können.

Hierdurch ist eine weitere Anpassung des Verfahrens und der zur Durchführung des Verfahrens geeigneten Vorrichtung an unterschiedliche Detektoranordnungen und zu erwartende Eigenschaften der Detektionsereignisse möglich.

## Patentansprüche

1. Verfahren zur Verarbeitung von Detektorsignalen, die Energieinformation enthalten, welches analoge Detektorsignale nach einer Vorverstärkung im Bereich des Detektors in digitale Signale umwandelt, wobei die digitalen Signale vor der Übertragung über eine Datenübertragungsstrecke wenigstens einem digitalen Signalverarbeitungsschritt unterworfen werden und wobei die digitalen Signale oder aus ihnen ermittelte Informationen anschließend über die Datenübertragungsstrecke zu einer Datenerfassungseinheit übertragen werden,
**dadurch gekennzeichnet,**
**dass** durch den digitalen Signalverarbeitungeschritt Energieinformationen gewonnen werden, wobei zur Gewinnung der Energieinformation eine Moving-Window-Deconvolution-Technik eingesetzt wird und wobei ferner durch den digitalen Signalverarbeitungsschritt mittels Wavelet-Transformationen Informationen über Wechselwirkungsorte von Detektionsereignissen gewonnen werden.

2. Verfahren nach Anspruch 1,
**dadurch gekennzeichnet,**
**dass** der digitale Signalverarbeitungsschritt durch digitale Bauelemente erfolgt und gesteuert wird.

3. Verfahren nach einem oder mehreren der vorgenannten Ansprüche,
**dadurch gekennzeichnet,**
**dass** der digitale Signalverarbeitungsschritt eine Triggerung der digitalen Signale umfasst, wobei ein Triggersignal sowohl intern generiert als auch extern eingelesen werden kann.

4. Verfahren nach einem oder mehreren der vorgenannten Ansprüche,
**dadurch gekennzeichnet,**
**dass** durch den digitalen Signalverarbeitungsschritt Informationen über Zeitpunkte von Detektionsereignissen ermittelt werden.

5. Vorrichtung zur Verarbeitung von Detektorsignalen, die Energieinformation enthalten, mit Vorverstärkern zum Verstärken der Detektorsignale, mit Abtast-Analog-Digital-Umwandlern (ADU) zur Umwandlung der Detektorsignale in digitale Signale, mit einer digitalen Signalverarbeitungseinheit, einer Datenerfassungseinheit (DAQ) und mit einer Datenübertragungsstrecke,
**dadurch gekennzeichnet, dass**
- sich die Abtast-Analog-Digital-Umwandler (ADU) zwischen den Vorverstärkern und der Datenübertragungsstrecke befinden,
- sich die digitalen Signalverarbeitungseinheiten zwischen den Abtast-Analog-Digital-Umwandlern (ADU) und der Datenübertragungsstrecke befinden, wobei die digitalen Signalverarbeitungseinheiten wenigstens einen Signalverarbeitungsschritt durchführen, in dem Energieinformationen aus den Detektorsignalen gewonnen werden, wobei zur Gewinnung der Energieinformationen eine Moving-Window-Deconvolution-Technik eingesetzt wird,
- die Ausgänge mehrerer digitaler Signalverarbeitungseinheiten mit einem Multiplexer verbunden sind, so dass der Multiplexer von den digitalen Signalverarbeitungseinheiten ausgegebene Signale in die Datenübertragungsstrecke überträgt und dass ferner
- die Datenübertragungsstrecke wenigstens einen Lichtleiter enthält.

6. Vorrichtung nach Anspruch 5,
**dadurch gekennzeichnet,**
**dass** ein Teil der digitalen Signalverarbeitungseinheiten durch handelsübliche Bauelemente wie digitale Signalprozessoren (DSP) oder programmierbare Logikbausteine (PLD) oder field programmable gate arrays (FPGA) gebildet werden.

7. Vorrichtung nach einem oder beiden der Ansprüche 5 und 6,
**dadurch gekennzeichnet,**
**dass** mehrere Abtast-Analog-Digital-Umwandler (ADU) mit Eingången eines Multiplexers verbunden sind, der die Signale der Abtast-Analog-Digital-Umwandler zu einer gemeinsamen digitalen Signalverarbeitungseinheit überträgt.

8. Vorrichtung nach einem oder mehreren der Ansprüche 5 bis 7,
**dadurch gekennzeichnet,**
**dass** sie wenigstens ein Mittel zur galvanischen Entkopplung zwischen der Signalerfassung und der Datenaufnahme enthält.

## Claims

1. A method for processing detector signals containing energy information, said method converting analog detector signals into digital signals after a pre-amplification in the area of the detector, whereby the digital signals undergo at least one digital signal processing step before being transmitted via a data transmission path, and whereby the digital signals or information ascertained from them is subsequently transmitted via the data transmission path to a data acquisition unit,
**characterized in that**
energy information is acquired through the digital signal processing step, whereby a moving window deconvolution technique is used in order to acquire the energy information, and moreover information about interaction sites of detection events is acquired through the digital signal processing step by means of wavelet transformations.

2. The method according to Claim 1,
**characterized in that**
the digital signal processing step is carried out and controlled by digital components.

3. The method according to one or more of the preceding claims,
**characterized in that**
the digital signal processing step comprises a triggering of the digital signals, whereby a trigger signal can be generated internally as well as read in externally.

4. The method according to one or more of the preceding claims,
**characterized in that**
information about points in time of detection events is ascertained through the digital signal processing step.

5. A device for processing detector signals containing energy information, comprising pre-amplifiers for amplifying detector signals, scanning analog-to-digital converters (ADU) for converting the detector signals into digital signals, a digital signal processing unit, a data acquisition unit (DAQ) and a data transmission path,
**characterized in that**
- the scanning analog-to-digital converters (ADU) are situated between the pre-amplifiers and the data transmission path,
- the digital signal processing units are situated between the scanning analog-to-digital converters (ADU) and the data transmission path, whereby the digital signal processing units carry out at least one signal processing step in which energy information is acquired from the detector signals, whereby a moving window deconvolution technique is used in order to acquire energy information,
- the outputs of several digital signal processing units are connected to a multiplexer so that signals emitted by the digital signal processing units are transmitted by the multiplexer into the transmission path, and also **in that**
- the transmission path comprises at least one optical waveguide.

6. The device according to Claim 5,
**characterized in that**
some of the digital signal processing units are made up of commercially available components such as digital signal processors (DSP) or programmable logic devices (PLD) or field programmable gate arrays (FPGA).

7. The device according to one or both of Claims 5 and 6,
**characterized in that**
several analog-to-digital converters (ADU) are connected to inputs of a multiplexer that transmits the signals of the scanning analog-to-digital converters to a shared digital signal processing unit.

8. The device according to one or more of Claims 5 to 7,
**characterized in that**
it comprises at least one means for galvanic decoupling between the signal acquisition and the data recording.

## Revendications

1. Procédé pour traiter des signaux de détecteur qui contiennent une information d'énergie, lequel convertit des signaux de détecteur analogiques en signaux numériques après une préamplification dans la zone du détecteur, les signaux numériques étant soumis à au moins une étape de traitement numérique du signal avant la transmission par le biais d'une liaison de transmission de données et les signaux numériques ou des informations déterminées à partir de ceux-ci étant ensuite transmis à une unité d'acquisition de données par le biais de la liaison de transmission de données, **caractérisé en ce que** des informations d'énergie sont obtenues par l'étape de traitement numérique du signal, une technique de déconvolution à fenêtre mobile étant utilisée pour obtenir l'information d'énergie et des informations sur les lieux d'interaction des événements détectés étant en outre obtenues par l'étape de traitement numérique du signal au moyen de transformations par ondelette.

2. Procédé selon la revendication 1, **caractérisé en ce que** l'étape de traitement numérique du signal est réalisée et commandée par des composants numériques.

3. Procédé selon une ou plusieurs des revendications précédentes, **caractérisé en ce que** l'étape de traitement numérique du signal comprend un déclenchement des signaux numériques, un signal de déclenchement pouvant à la fois être généré en interne et aussi lu en externe.

4. Procédé selon une ou plusieurs des revendications précédentes, **caractérisé en ce que** des informations sur les moments des événements détectés sont déterminées par l'étape de traitement numérique du signal.

5. Dispositif pour traiter des signaux de détecteur qui contiennent une information d'énergie, comprenant des préamplificateurs pour préamplifier les signaux de détecteur, comprenant des convertisseurs analogique/numérique à balayage (ADU) pour convertir les signaux de détecteur en signaux numériques, comprenant une unité de traitement numérique du signal, une unité d'acquisition de données (DAQ) et comprenant une liaison de transmission de données, **caractérisé en ce que**
- les convertisseurs analogique/numérique à balayage (ADU) se trouvent entre les préamplificateurs et la liaison de transmission de données,
- les unités de traitement numérique du signal se trouvent entre les convertisseurs analogique/numérique à balayage (ADU) et la liaison de transmission de données, les unités de traitement numérique du signal effectuant au moins une étape de traitement du signal dans laquelle des informations d'énergie sont obtenues à partir des signaux de détecteur, une technique de déconvolution à fenêtre mobile étant utilisée pour obtenir les informations d'énergie,
- les sorties de plusieurs unités de traitement numérique du signal étant reliées à un multiplexeur de manière à ce que le multiplexeur transmette dans la liaison de transmission de données les signaux sortant des unités de traitement numérique du signal et qu'en plus
- la liaison de transmission de données contient au moins une fibre optique.

6. Dispositif selon la revendication 5, **caractérisé en ce qu'**une partie des unités de traitement numérique du signal est réalisée par des composants courants tels que des processeurs de signaux numériques (DSP) ou des composants logiques programmables (PLD) ou encore des réseaux logiques programmables sur site (FPGA).

7. Dispositif selon l'une des ou les deux revendications 5 et 6, **caractérisé en ce que** plusieurs convertisseurs analogique/numérique à balayage (ADU) sont reliés avec les entrées d'un multiplexeur qui transmet les signaux des convertisseurs analogique/numérique à balayage à une unité de traitement numérique du signal commune.

8. Dispositif selon l'une des revendications 5 à 7, **caractérisé en ce qu'**il comprend au moins un moyen de découplage galvanique de l'acquisition des signaux et de l'enregistrement des données.
